# EUROPÄISCHE PATENTANMELDUNG

(11) **EP 2 573 142 A1**
(43) Veröffentlichungstag der Anmeldung: **27.03.2013**
(21) Anmeldenummer: 11182189.8
(22) Anmeldetag: 21.09.2011
(51) Int. Cl.: C08L 101/00, C08L 25/06, C08L 27/06, C08L 33/12, C08L 77/00, C08L 67/02, C08L 59/02, C08L 67/04, C08L 33/06

(54) **Thermoplastische Formmasse mit verbesserter Kerbschlagzähigkeit**

(71) Anmelder: BASF SE, 67056 Ludwigshafen (DE)
(72) Erfinder: Jain, Sachin, Jalgaon, 425001 (IN); Nalawade, Sameer, 68159 Mannheim (DE)

(57) **Zusammenfassung**

Die Erfindung betrifft eine thermoplastische Formmasse, enthaltend:
A) 70 bis 98 Gew.-%, bezogen auf die Komponenten A und B, eines Thermoplasten;
B) 2 bis 30 Gew.-%, bezogen auf die Komponenten A und B, einer Polymermischung enthaltend:
i) 30 bis 70 Gew.-%, bezogen auf das Gesamtgewicht der Komponenten i bis ii, mindestens eines Polyesters auf Basis von aliphatischen und aromatischen Dicarbonsäuren und einer aliphatischen Dihydroxyverbindung;
ii) 70 bis 30 Gew.-%, bezogen auf das Gesamtgewicht der Komponenten i bis ii, Polymilchsäure;
iii) 0 bis 10 Gew.-%, bezogen auf das Gesamtgewicht der Komponenten i bis iv, eines Epoxidgruppen-haltigen Copolymers auf Basis Styrol, Acrylsäureester und/oder Methacrylsäureester;
iv) 0 - 15 % Gew.-%, bezogen auf das Gesamtgewicht der Komponenten i bis iv, Nukleierungsmittel, Gleit- und Antiblockmittel, Wachse, Antistatika, Antifog-Mittel oder Farbstoffe; und

C) 0 bis 40 Gew.-%, bezogen auf die Komponenten A bis C, weiterer Zusatzstoffe.

## Beschreibung

Die Erfindung betrifft eine thermoplastische Formmasse, enthaltend:
A) 70 bis 98 Gew.-%, bezogen auf die Komponenten A und B, eines Thermoplasten;
B) 2 bis 30 Gew.-%, bezogen auf die Komponenten A und B, einer Polymermischung enthaltend:
   i) 30 bis 70 Gew.-%, bezogen auf das Gesamtgewicht der Komponenten i bis ii, mindestens eines Polyesters auf Basis von aliphatischen und aromatischen Dicarbonsäuren und einer aliphatischen Dihydroxyverbindung;
   ii) 70 bis 30 Gew.-%, bezogen auf das Gesamtgewicht der Komponenten i bis ii, Polymilchsäure;
   iii) 0 bis 10 Gew.-%, bezogen auf das Gesamtgewicht der Komponenten i bis iv, eines Epoxidgruppen-haltigen Copolymers auf Basis Styrol, Acrylsäureester und/oder Methacrylsäureester;
   iv) 0 - 15 % Gew.-%, bezogen auf das Gesamtgewicht der Komponenten i bis iv, Nukleierungsmittel, Gleit- und Antiblockmittel, Wachse, Antistatika, Antifog-Mittel oder Farbstoffe; und
C) 0 bis 40 Gew.-%, bezogen auf die Komponenten A bis C, weiterer Zusatzstoffe.

Zahlreiche technische Kunststoffe sind spröde. Sie weisen eine geringe Schlagzähigkeit und insbesondere Kerbschlagzähigkeit auf. Dieses Problem tritt insbesondere bei den amorphen Polymeren wie beispielsweise Polyvinylchlorid, Polystyrol oder Polymethylmethacrylat auf. Aber auch technische Kunststoffe wie Polyamid, Polybutylenterephthalat und Polyoxymethylen sind für manche Anwendungen hinsichtlich ihrer Schlagzähigkeit noch nicht optimal.

Bisher versuchte man das Problem der Sprödigkeit durch Copolymerisation mit geeigneten Monomeren (sogenannte innere Weichmacher) oder durch Zusatz von niedermolekularen Substanzen (äußere Weichmacher) zu lösen. Die beiden bisherigen Ansätze weisen jedoch Nachteile auf. Das Prinzip der inneren Weichmacher setzt ein individuell abgestimmtes Herstellverfahren, wie beispielsweise das Herstellverfahren von HIPS (High Impact PolyStyrene) voraus. Äußere Weichmacher wie Phthalate, Alkylsufonsäureester des Phenols, oder Trialkylcitrate sind niedermolekulare Verbindungen, die mit der Zeit aus dem Kunststoff entweichen (ausschwitzen). Dies führt zum einen zum nachträglichen Verspröden des Kunststoffs und weiterhin sind einige Weichmacher wie Phthalate wegen ihrer hormonähnlichen Wirkung bedenklich.

Ziel der vorliegenden Erfindung war es demnach Weichmacher insbesondere für amorphe Thermoplasten zu finden, die die obengenannten Nachteile nicht aufweisen.

Überraschenderweise wurde gefunden, dass durch Einarbeiten von 2 bis 30 Gew.-% einer Polymermischung B die Kerbschlagzähigkeit eines Thermoplasten A deutlich verbessert werden kann. Die Polymermischungen B eignen sich daher hervorragend als Weichmacher in Thermoplasten.

Im Folgenden wird die Erfindung näher beschrieben:
Unter Komponente A können alle gängigen Thermoplaste verstanden werden. Vorzugsweise wird unter einem Thermoplasten ein teilkristallines Polymer ausgewählt aus der Gruppe bestehend aus: Polyamid, Polybutylenterephthalat und Polyoxymethylen und besonder bevorzugt ein amorphes Polymer ausgewählt aus der Gruppe bestehend aus: Polyvinylchlorid, Polystyrol und Polymethylmethacrylat verstanden. Bei den amorphen Polymern ist der Weichmachereffekt der Polymermischung B besonders stark ausgeprägt.

Komponente B bedeutet eine Polymermischung enthaltend:
i) 30 bis 70 Gew.-%, bezogen auf das Gesamtgewicht der Komponenten i bis ii, mindestens eines Polyesters auf Basis von aliphatischen und aromatischen Dicarbonsäuren und einer aliphatischen Dihydroxyverbindung;
ii) 70 bis 30 Gew.-%, bezogen auf das Gesamtgewicht der Komponenten i bis ii, Polymilchsäure;
iii) 0 bis 10 Gew.-%, bezogen auf das Gesamtgewicht der Komponenten i bis iv, eines Epoxidgruppen-haltigen Copolymers auf Basis Styrol, Acrylsäureester und/oder Methacrylsäureester;
iv) 0 - 15 % Gew.-%, bezogen auf das Gesamtgewicht der Komponenten i bis iv, Nukleierungsmittel, Gleit- und Antiblockmittel, Wachse, Antistatika, Antifog-Mittel oder Farbstoffe.

Vorzugsweise bedeutet Komponente B einer Mischung, enthaltend:
i) 39,9 bis 49,9 Gew.-%, bezogen auf das Gesamtgewicht der Komponenten i bis iv, mindestens eines Polyesters auf Basis von aliphatischen und aromatischen Dicarbonsäuren und einer aliphatischen Dihydroxyverbindung;
ii) 59,9 bis 39,9 Gew.-%, bezogen auf das Gesamtgewicht der Komponenten i bis iv, Polymilchsäure;
iii) 0,1 bis 1 Gew.-%, bezogen auf das Gesamtgewicht der Komponenten i bis iv, eines Epoxidgruppen-haltigen Copolymers auf Basis Styrol, Acrylsäureester und/oder Methacrylsäureester;
iv) 0,1 - 2 % Gew.-%, bezogen auf das Gesamtgewicht der Komponenten i bis iv, Nukleierungsmittel, Gleit- und Antiblockmittel, Wachse, Antistatika, Antifog-Mittel oder Farbstoffe.

Als Komponente i sind aliphatische oder teilaromatische (aliphatisch-aromatische) Polyester zu verstehen.

Als Komponente i) sind wie erwähnt rein aliphatische Polyester geeignet. Unter aliphatischen Polyestern werden Polyester aus aliphatischen C₂-C₁₂-Alkandiolen und aliphatischen C₄-C₃₆-Alkandicarbonsäuren wie Polybutylensuccinat (PBS), Polybutylenadipat (PBA), Polybutylensuccinatadipat (PBSA), Polybutylensuccinatsebacat (PBSSe), Polybutylensebacatadipat (PBSeA), Polybutylensebacat (PBSe) oder entsprechende Polyesteramide verstanden. Die aliphatischen Polyester werden beispielsweise von den Firmen Showa Highpolymers unter dem Namen Bionolle® und von Mitsubishi unter dem Namen GSPla® vermarktet. Neuere Entwicklungen sind in der WO 2010/034711 beschrieben.

Die aliphatischen Polyester weisen in der Regel Viskositätszahlen nach DIN 53728 von 150 bis 320 cm³/g und vorzugsweise 150 bis 250 cm³/g auf.

Der MVR (Schmelzvolumenrate) nach EN ISO 1133 (190°C, 2,16 kg Gewicht) liegt im Allgemeinen bei 0,1 bis 70, bevorzugt bei 0,8 bis 70 und insbesondere bei 1 bis 60 cm³/10 min.

Die Säurezahlen nach DIN EN 12634 liegen im Allgemeinen bei 0,01 bis 1,2 mg KOH/g, vorzugsweise bei 0,01 bis 1,0 mg KOH/g und insbesondere bevorzugt bei 0,01 bis 0,7 mg KOH/g.

Teilaromatische Polyester, die ebenfalls als Komponenet i) geeignet sind, bestehen aus aliphatischen Diolen und aliphatischen sowie aromatischen Dicarbonsäuren. Zu den geeigneten teilaromatischen Polyestern gehören lineare nicht kettenverlängerte Polyester (WO 92/09654). Insbesondere sind aliphatisch/aromatische Polyester aus Butandiol, Terephthalsäure und aliphatischen C₄-C₁₈-Dicarbonsäuren wie Bernsteinsäure, Glutarsäure, Adipinsäure, Korksäure, Azelainsäure, Sebazinsäure und Brassylsäure (beispielsweise wie in WO 2006/097353 bis 56 beschrieben) geeignete Mischungspartner. Bevorzugt werden kettenverlängerte und/oder verzweigte teilaromatische Polyester als Komponente i eingesetzt. Letztere sind aus den eingangs genannten Schriften WO 96/15173 bis 15176, 21689 bis 21692, 25446, 25448 oder der WO 98/12242, bekannt, auf die ausdrücklich Bezug genommen wird. Mischungen unterschiedlicher teilaromatischer Polyester kommen ebenso in Betracht.

Insbesondere geeignet sind biologisch abbaubare, aliphatisch-aromatischer Polyester i, die enthalten:
a) 40 bis 70 mol %, bezogen auf die Komponenten a bis b, eines oder mehrerer Dicarbonsäurederivate oder Dicarbonsäuren ausgewählt aus der Gruppe bestehend aus: Bernsteinsäure, Adipinsäure, Sebazinsäure, Azelainsäure und Brassylsäure;
b) 60 bis 30 mol %, bezogen auf die Komponenten a bis b, eines Terephthalsäurederivats;
c) 98 bis 102 mol %, bezogen auf die Komponenten a bis b, eines C₂-C₈-Alkylendiols oder C₂-C₆-Oxyalkylendiols;
d) 0,00 bis 2 Gew.-%, bezogen auf das Gesamtgewicht der Komponenten a bis d, eines Kettenverlängerers und /oder Verzweigers ausgewählt aus der Gruppe bestehend aus: einem di oder polyfunktionellen Isocyanat, Isocyanurat, Oxazolin , Epoxid, Peroxid, Carbonsäureanhydrid und /oder einem mindestens trifunktionellen Alkohol oder einer mindestens trifunktionellen Carbonsäure.

Bevorzugt eingesetzte aliphatisch-aromatische Polyester i enthalten:
a) 50 bis 65, bezogen auf die Komponenten a bis b, eines oder mehrerer Dicarbonsäurederivate oder Dicarbonsäuren ausgewählt aus der Gruppe bestehend aus Bernsteinsäure, Azelainsäure, Brassylsäure und vorzugsweise Adipinsäure, insbesondere bevorzugt Sebazinsäure;
b) 50 bis 35, bezogen auf die Komponenten a bis b, eines Terephthalsäurederivats;
c) 98 bis102 mol %, bezogen auf die Komponenten a bis b, 1,4-Butandiol und
d) 0 bis 2 Gew.-%, vorzugsweise 0, 01 bis 2 Gew.-%, bezogen auf das Gesamtgewicht der Komponenten a bis d, eines Kettenverlängerers und /oder Verzweigers ausgewählt aus der Gruppe bestehend aus: einem polyfunktionellen Isocyanat , Isocyanurat, Oxazolin, Carbonsäureanhydrid wie Maleinsäureanhydrid, Epoxid (insbesondere eines epoxidhaltigen Poly(meth)acrylats) und /oder einem mindestens trifunktionellen Alkohol oder einer mindestens trifunktionellen Carbonsäure.

Als aliphatische Dicarbonsäuren eignen sich vorzugsweise, Bernsteinsäure, Adipinsäure und insbesondere bevorzugt Sebazinsäure. Die genannten Disäuren haben den Vorteil, dass sie auch als nachwachsende Rohstoffe zur Verfügung stehen.

Die Synthese der beschriebenen Polyester i erfolgt nach den in WO-A 92/09654, WO-A 96/15173 oder vorzugsweise in WO-A 09/127555 und WO-A 09/127556 beschriebenen Verfahren, vorzugweise in einer zweistufigen Reaktionskaskade. Zunächst werden die Dicarbonsäurederivate zusammen mit dem Diol in Anwesenheit eines Umesterungskatalysators zu einem Präpolyester umgesetzt. Dieser Präpolyester weist im Allgemeinen eine Viskositätszahl (VZ) von 50 bis 100mL/g, vorzugsweise 60 bis 80 mL/g auf. Als Katalysatoren werden üblicherweise Zink-, Aluminium- und insbesondere Titankatalysatoren eingesetzt. Titankatalysatoren wie Tetra(isopropyl)orthotitanat und insbesondere Tetrabutylorthotitanat (TBOT) haben gegenüber den in der Literatur häufig verwendeten Zinn-, Antimon-, Kobalt- und Bleikatalysatoren wie beispielsweise Zinndioctanat den Vorteil, dass im Produkt verbleibende Restmengen des Katalysators oder Folgeprodukt des Katalysators weniger toxisch sind. Dieser Umstand ist bei den biologisch abbaubaren Polyestern besonders wichtig, da sie über die Kompostierung unmittelbar in die Umwelt gelangen können.

Die Polyester i werden anschließend in einem zweiten Schritt nach den in WO-A 96/15173 und EP-A 488 617 beschriebenen Verfahren hergestellt. Der Präpolyester wird mit Kettenverlängeren d, beispielsweise mit Diisocyanaten oder mit epoxidhaltigen Polymethacrylaten in einer Kettenverlängerungsreaktion zu einem Polyester mit einer VZ von 50 bis 450 mL/g, vorzugsweise 80 bis 250 mL/g umgesetzt.

In der Regel werden 0,01 bis 2 Gew-%, vorzugsweise 0,1 bis 1,0 Gew.-% und insbesondere bevorzugt 0,1 bis 0,3 Gew.-% bezogen auf das Gesamtgewicht der Komponenten i bis iii, eines Verzweigers (d') und/oder Kettenverlängerers (d) ausgewählt aus der Gruppe bestehend aus: einem polyfunktionellen Isocyanat, Isocyanurat, Oxazolin, Epoxid, Peroxid, Carbonsäureanhydrid, einem mindestens trifunktionellen Alkohol oder einer mindestens trifunktionellen Carbonsäure eingesetzt. Als Kettenverlängerer d kommen polyfunktionelle und insbesondere difunktionelle Isocyanate, Isocyanurate, Oxazoline, Carbonsäureanhydrid oder Epoxide in Frage.

Kettenverlängerer sowie Alkohole oder Carbonsäurederivate mit mindestens drei funktionellen Gruppen können auch als Vernetzer d' aufgefasst werden. Besonders bevorzugte Verbindungen haben drei bis sechs funktionelle Gruppen. Beispielhaft seien genannt: Weinsäure, Zitronensäure, Äpfelsäure; Trimethylolpropan, Trimethylolethan; Pentaerythrit; Polyethertriole und Glycerin, Trimesinsäure, Trimellitsäure, Trimellitsäureanhydrid, Pyromellitsäure und Pyromellitsäuredianhydrid. Bevorzugt sind Polyole wie Trimethylolpropan, Pentaerythrit und insbesondere Glycerin. Mittels der Komponenten d und d' lassen sich biologisch abbaubare Polyester mit einer strukturellen Viskosität aufbauen. Das rheologische Verhalten der Schmelzen verbessert sich; die biologisch abbaubaren Polyester lassen sich leichter verarbeiten. Die Verbindungen d wirken scherentzähend, d.h. die Viskosität bei höheren Schergeschwindigkeiten wird geringer.

Die Polyester i weisen in der Regel ein zahlenmittleres Molekulargewicht (Mn) im Bereich von 5000 bis 100000, insbesondere im Bereich von 10000 bis 75000 g/mol, bevorzugt im Bereich von 15000 bis 38000 g/mol, ein gewichtmittleres Molekulargewicht (Mw) von 30000 bis 300000, vorzugsweise 60000 bis 200000 g/mol und ein Mw/Mn-Verhältnis von 1 bis 6, vorzugsweise 2 bis 4 auf. Die Viskositätszahl liegt zwischen 50 und 450, vorzugsweise von 80 bis 250 g/mL (gemessen in o-Dichlorbenzol/Phenol (Gewichtsverhältnis 50/50). Der Schmelzpunkt liegt im Bereich von 85 bis 150, bevorzugt im Bereich von 95 bis 140°C.

Die genannten Polyester können Hydroxy- und/oder Carboxylend-gruppen in jedem beliebigen Verhältnis aufweisen. Die genannten teilaromatischen Polyester können auch endgruppenmodifiziert werden. So können beispielsweise OH-Endgruppen durch Umsetzung mit Phthalsäure, Phthalsäureanhydrid, Trimellithsäure, Trimellithsäureanhydrid, Pyromellithsäure oder Pyromellithsäureanhydrid säuremodifiziert werden. Bevorzugt sind Polyester mit Säurezahlen kleiner als 1,5 mg KOH/g.

Die biologisch abbaubaren Polyester i können weitere dem Fachmann bekannte, aber nicht erfindungswesentliche Inhaltsstoffe enthalten. Beispielsweise die in der Kunststofftechnik üblichen Zusatzstoffe wie Stabilisatoren; Nukleierungsmittel; Gleit- und Trennmittel wie Stearate (insbesondere Calziumstearat); Weichmacher (Plastifizierer) wie beispielsweise Zitronensäureester (insbesondere Acetyl-tributylcitrat), Glycerinsäureester wie Triacetylglycerin oder Ethylenglykolderivate, Tenside wie Polysorbate, Palmitate oder Laurate; Wachse wie beispielsweise Bienenwachs oder Bienenwachsester; Antistatikum, UV-Absorbers; UV-Stabilisators; Antifog-Mittel oder Farbstoffe. Die Additive werden in Konzentrationen von 0 bis 5 Gew.-%, insbesondere 0,1 bis 2 Gew.-% bezogen auf die erfindungsgemäßen Polyester eingesetzt.

Als Komponente ii) wird Polymilchsäure mit dem folgenden Eigenschaftsprofil bevorzugt eingesetzt:
- einer Schmelzvolumenrate (MVR bei 190° C und 2.16 kg nach ISO 1133 von 0.5 bis 15 bevorzugt 1 bis 9, besonders bevorzugt 2 bis 8 ml/10 Minuten)
- einem Schmelzpunkt unter 180° C;
- einem Glaspunkt (Tg) größer 40°C
- einem Wassergehalt von kleiner 1000 ppm
- einem Monomeren-Restgehalt (Lactid) von kleiner 0.3%.
- einem Molekulargewicht von größer 50 000 Dalton.

Bevorzugte Polymilchsäuren sind beispielsweise von NatureWorks® das Ingeo® 2002 D, 4032 D, 4042 D und 4043 D, 8251 D, 3251 D und insbesondere 8051 D sowie 8052D. NatureWorks 8051 D und 8052 D sind Polymilchsäuren der Fa. NatureWorks, mit den folgenden Produkteigenschaften: Tg: 65,3°C, Tm: 153,9°C, MVR: 6,9 [ml/10 Minuten], M_{w}:186000, Mn:107000. Weiterhin weisen diese Produkte eine etwas höhere Säurezahl auf.

Für die Herstellung der erfindungsgemäßen expandierbaren Granulate haben sich insbesondere Polymilchsäuren mit einer MVR nach ISO 1133 [190°C/2,16 kg] von 5 bis 8 ml/10 Minuten als vorteilhaft erweisen.

Komponente iii) wird im Folgenden näher beschrieben.

Unter Epoxiden wird insbesondere Epoxidgruppen-haltiges Copolymer auf Basis Styrol, Acrylsäureester und/oder Methacrylsäureester verstanden. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) Mwder Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppenhaltige Copolymere des obengenannten Typs werden beispielsweise von der BASF Resins B.V. unter der Marke Joncryl^{®} ADR vertrieben. Als Kettenverlängerer besonders geeignet ist Joncryl^{®} ADR 4368.

Unter Komponente iv wird insbesondere eines oder mehrere der folgenden Zusatzstoffe verstanden: Stabilisator, Nukleierungsmittel, Gleit- und Trennmittel, Tensid, Wachs, Antistatikum, Antifog-Mittel, Farbstoff, Pigment, UV-Absorber, UV-Stabilisator oder sonstigen Kunststoffadditiv. Komponente iv wird vorzugsweise in einer Menge von 0,5 bis 1 Gew.-% bezogen auf die Komponenten i und iv eingesetzt.

Die erfindungsgemäßen Formmassen enthalten 70 bis 98 Gew.-%, vorzugsweise 75 bis 92 Gew.-%, und insbesondere bevorzugt 80 bis 90 Gew.-% des Thermoplasten A und dementsprechend 2 bis 30 Gew.-%, vorzugsweise 8 bis 25 Gew.-%, und insbesondere bevorzugt 10 bis 20 Gew.-% der Polymermischung B. Die Kerbschagzähigkeit steigt in der Regel mit wachsendem Anteil der Polymermischung B an.

Die Zusatzstoffe C werden in Mengen von 0 bis 40 Gew.-%, insbesondere 0,5 bis 30 Gew.-%, bezogen auf die Komponenten A bis C eingesetzt. Die hohen Gewichtsanteile kommen insbesondere für Füllstoffe in Frage.

Als bevorzugte faserförmige Füllstoffe C seien Kohlenstofffasern, Aramid-Fasern, Glasfasern und Kaliumtitanat-Fasern genannt, wobei Glasfasern als E-Glas besonders bevorzugt sind. Diese werden als Rovings in den handelsüblichen Formen eingesetzt.

Die erfindungsgemäß als Roving eingesetzten Glasfasern weisen einen Durchmesser von 6 bis 20 µm, bevorzugt von 10 bis 18 µm auf, wobei der Querschnitt der Glasfasern rund, oval oder eckig ist. Insbesondere werden erfindungsgemäß E-Glasfasern verwendet. Es können aber auch alle anderen Glasfasersorten, wie z.B. A-, C-, D-, M-, S-, R-Glasfasern oder beliebige Mischungen davon oder Mischungen mit E-Glasfasern eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 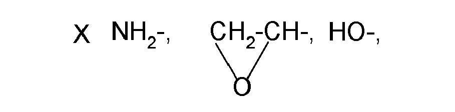 n eine ganze Zahl von 2 bis 10, bevorzugt 3 bis 4
m eine ganze Zahl von 1 bis 5, bevorzugt 1 bis 2
k eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf C)) zur Oberflächenbeschichtung eingesetzt.

Andere geeignete Beschichtungsmittel (auch Schlichte genannt) basieren auf Isocyanaten.

Bevorzugt beträgt das L/D (Länge/Durchmesser)-Verhältnis 100 bis 4000, insbesondere 350 bis 2000 und ganz besonders 350 bis 700.

Die thermoplastischen Formmassen enthalten weiterhin vorteilhafterweise ein Schmiermittel C. Als Komponente C können die erfindungsgemäßen Formmassen von 0 bis 3, bevorzugt von 0,05 bis 3, vorzugsweise von 0,1 bis 1,5 und insbesondere von 0,1 bis 1 Gew.-% eines Schmiermittels bezogen auf die Gesamtmenge der Komponenten A bis C enthalten.

Bevorzugt sind Aluminium-, Alkali-, Erdalkalisalze oder Ester- oder Amide von Fettsäuren mit 10 bis 44 C-Atomen, vorzugsweise mit 14 bis 44 C-Atomen. Die Metallionen sind vorzugsweise Erdalkali und Aluminium (AI), wobei Calzium (Ca) oder Magnesium besonders bevorzugt sind. Bevorzugte Metallsalze sind Ca-Stearat und Ca-Montanat sowie Al-Stearat. Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitrat, Glycerintrilaurat, Glycerinmonobehenat und Penta-erythrittetrastearat.

Es können auch Mischungen verschiedener Ester oder Amide oder Ester mit Amiden in Kombination eingesetzt werden, wobei das Mischungsverhältnis beliebig ist.

Als weitere Komponente C können die erfindungsgemäßen thermoplastischen Formmassen übliche Verarbeitungshilfsmittel wie Stabilisatoren, Oxidationsverzögerer, weitere Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher, Flammschutzmittel usw. enthalten.

Als Beispiele für Oxidationsverzögerer und Wärmestabilisatoren seien Phosphite und weitere Amine (z. B. TAD), Hydrochinone, verschiedene substituierte Vertreter dieser Gruppen und deren Mischungen in Konzentrationen bis zu 1 Gew.-%, bezogen auf das Gewicht der thermoplastischen Formmassen genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß und/oder Grafit, weiterhin organische Pigmente, wie Phthalocyanine, Chinacridone, Perylene sowie Farbstoffe, wie Nigrosin und Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Als Flammschutzmittel seien roter Phosphor, P- und N-haltige Flammschutzmittel sowie halogenierte Flammschutzmittelsysteme und deren Synergisten genannt.

### Beispiele

Messmethoden und Eigenschaften

Die Charpy-Kerbschlagzähigkeit wurde bei 23°C respektive -30°C gemäß ISO 179-2/1 eA ermittelt.

Die Streckspannung, E-Modul und Bruchdehnung wurde nach ISO 527-2:1993 ermittelt. Die Zuggeschwindigkeit betrug 5 mm/min.

### Einsatzstoffe

Es wurden folgende Komponenten verwendet:
Komponente A:
   - Ai:: PVC 250 SB der Firma Solvin SA (CAS:9002-86-2 , Dichte: 590 g/l, Restmonomergehalt: < 1 ppm, Schmelzpunkt: 75-85 °C)
   - Aii:: Ultramid^{®} B27E der Firma BASF SE (CAS:25038-54-4, Dichte: 1120-1150 g/l, Schmelzpunkt: 220 °C, Relative Viskosität (1 % in 96% H2SO4): 2,7± 0,03)
Komponente B:
   - Bi:: 67,9 Gew.-% Ecoflex^{®} C1200 (alte Produktbezeichnung: Ecoflex^{®} FBX 7011)- ein Polybutylenadipat-coterephthalat der Fa. BASF SE, 32 Gew.-% Polymilchsäure (PLA) Typ 4043D der Firma Natureworks LLC; 0,1 Gew.-% Joncryl® ADR 4368 - ein epoxidgruppen-haltiges Copolymer auf Basis Styrol, Acrylsäureester und/oder Methacrylsäureester der Firma BASF Resins B.V.
   - Bii:: 54,9 Gew.-% Ecoflex^{®} C1200 (alte Produktbezeichnung: Ecoflex^{®} FBX 7011)- ein Polybutylenadipat-coterephthalat der Fa. BASF SE, 45 Gew.-% Polymilchsäure (PLA) Typ 4043D der Firma Natureworks LLC; 0,1 Gew.-% Joncryl® ADR 4368 - ein epoxidgruppen-haltiges Copolymer auf Basis Styrol, Acrylsäureester und/oder Methacrylsäureester der Firma BASF Resins B.V.
Komponente C:
   - Ci:: Baerostab M25-85 der Firma Baerlocher GmbH (Baerostab M25-85 ist ein modifiziertes Butyl-Zinn-mercaptid. Dieses Product enthält ein nicht migrierendes Gleitmittel , and wurde als PVC Stabilisator entwickelt. Dichte bei 20 °C: 1080 g/l, Viskosität bei 20 °C: 80 mPa.s)
   - Cii:: AcrawaxC der Firma Lonza AG (besteht aus N,N'-Ethylenbisstearamid (CAS:110-30-5), N,N'-Ethan-1,2-diylbishexadecan-1-amid (CAS: 5518-18-3), C₁₄₋₁₈-Fettsäuren (CAS: 67701-02-4), Schmelzpunkt: 140-145 °C)
   - Ciii:: Irganox 98 der Firma BASF SE (N,N'-Hexane-1,6-diylbis[3-(3,5-di-tert-butyl-4hydroxyphenylpropionamide)], CAS Number: 23128-74-7, Schmelzpunkt: 156-165 °C)
   - Civ:: Talkum IT der Firma Mondo Minerals (CAS: 14807-96-6, Dichte:2750 g/l)

### Beispiel 1

Die Formmassen des Vergleichsbeispiels 1 und Beispiels 1 wurden auf einem DSM Miniextruder mit einer Drehzahl von 80 1/min bei 180°C hergestellt:

### Herstellung der Probekörper

Die zur Bestimmung der Eigenschaften verwendeten Prüfkörper wurden mittels einer DSM Spritzgußmaschine hergestellt. Die 180°C heiße im DSM Miniextruder hergestellte Schmelzemischung wurde mit 15bar in das 70°C heiße Werkzeug gepresst. Die Kerbe wurde in den Charpystab nach ISO 179-2/1 eA(F) gefräst und geprüft.

**Tabelle 1: Einfluss von Komponente B auf die Kerbschlagzähigkeit von PVC**

| Komponenten [Gew.-%] | Vergleichs-Beispiel 1V | Beispiel 1 |
|---|---|---|
| Ai) | 98 | 88 |
| Bi) | | 10 |
| Ci) | 2 | 2 |
| Total | 100 | 100 |
| | | |
| Charpy gekerbt [kJ/m²] bei 23°C | 1,4 | 2,0 |

Die Zusammensetzungen der Formmassen und die Ergebnisse der Messungen sind der Tabelle 1 zu entnehmen. Beispiel 1 mit der erfindungsgemäßen Polymermischung B wies eine um 42 % höhere Kerbschlagzähigkeit als Vergleichsbeispiel 1 auf.

### Beispiel 2

Die Formmassen des Vergleichsbeispiels 2 und der Beispiele 2 und 3 wurden auf einer ZSK 30 mit einer Drehzahl von 250 1/min bei 260°C hergestellt:

### Herstellung der Probekörper

Die zur Bestimmung der Eigenschaften verwendeten Prüfkörper wurden mittels einer Battenfeld 50 Spritzgußmachine hergestellt. Die unter 2) und 3) hergestellten Granulate wurden aufgeschmolzen und mit Umdrehungszahl der Schnecke 100 U/min und Verweilzeit 50 s in das Werkzeug eingepresst. Die Prüfkörper für die Spannungstests wurden nach ISO 527-2/1 A/50 und die Prüfkörper für die Schlagzähigkeitsmessungen nach ISO 179-2/1 eA(F) hergestellt. Die Einspritztemperatur betrug 260°C, die Werkzeugtemperatur 80°C.

**Tabelle 2: Einfluss von Komponente B auf die Kerbschlagzähigkeit von Polyamid**

| Komponenten [Gew.-%] | Vergleichs-Beispiel 2V | Beispiel 2 | Beispiel 3 |
|---|---|---|---|
| Aii) | 98,61 | 88,75 | 69,03 |
| Bii) | | 10 | 30 |
| Cii) | 1,11 | 1 | 0,78 |
| Ciii) | 0,22 | 0,2 | 0,16 |
| Civ) | 0,06 | 0,05 | 0,04 |
| Total | 100 | 100 | 100 |
| | | | |
| Charpy gekerbt [kJ/m²] bei 23°C | 4,4 | 6,4 | 10,6 |
| Charpy gekerbt [kJ/m²] bei -30°C | 2,7 | 3,2 | 5,0 |

Die Zusammensetzungen der Formmassen und die Ergebnisse der Messungen sind der Tabelle 2 zu entnehmen. Beispiel 2 mit 10 Gew.-% der erfindungsgemäßen Polymermischung B wies bei 23 °C (-30 °C) eine um 45 % (19 %) höhere Kerbschlagzähigkeit als Vergleichsbeispiel 2 auf. Beispiel 3 mit 30 Gew.-% der erfindungsgemäßen Polymermischung B wies bei 23 °C (-30 °C) eine um 141 % (85 %) höhere Kerbschlagzähigkeit als Vergleichsbeispiel 2 auf.

Die Zugeigenschaften: Bruchdehnung, Zugfestigkeit und E-Modul waren im erfindungsgemäßen Beispiel 3 gegenüber Beispiel 2 verbessert und auf einem ähnlichen Niveau wie in Vergleichsbeispiel 2V.

## Patentansprüche

1. Thermoplastische Formmasse, enthaltend
A) 70 bis 98 Gew.-%, bezogen auf die Komponenten A und B, eines Thermoplasten;
B) 2 bis 30 Gew.-%, bezogen auf die Komponenten A und B, einer Polymermischung enthaltend:
i) 30 bis 70 Gew.-%, bezogen auf das Gesamtgewicht der Komponenten i bis ii, mindestens eines Polyesters auf Basis von aliphatischen und aromatischen Dicarbonsäuren und einer aliphatischen Dihydroxyverbindung;
ii) 70 bis 30 Gew.-%, bezogen auf das Gesamtgewicht der Komponenten i bis ii, Polymilchsäure;
iii) 0 bis 10 Gew.-%, bezogen auf das Gesamtgewicht der Komponenten i bis iv, eines Epoxidgruppen-haltigen Copolymers auf Basis Styrol, Acrylsäureester und/oder Methacrylsäureester;
iv) 0 - 15 % Gew.-%, bezogen auf das Gesamtgewicht der Komponenten i bis iv, Nukleierungsmittel, Gleit- und Antiblockmittel, Wachse, Antistatika, Antifog-Mittel oder Farbstoffe; und
C) 0 bis 40 Gew.-%, bezogen auf die Komponenten A bis C, weiterer Zusatzstoffe.

2. Thermoplastische Formmasse nach Anspruch 1, wobei der Thermoplast A ein amorphes Polymer ausgewählt aus der Gruppe bestehend aus: Polyvinylchlorid, Polystyrol und Polymethylmethacrylat ist.

3. Thermoplastische Formmasse nach Anspruch 1, wobei der Thermoplast A ein teilkristallines Polymer ausgewählt aus der Gruppe bestehend aus: Polyamid, Polybutylenterephthalat und Polyoxymethylen ist.

4. Verfahren zur Erhöhung der Kerbschlagzähigkeit eines Thermoplasten A durch Mischen von
A) 70 bis 98 Gew.-%, bezogen auf die Komponenten A und B, eines Thermoplasten A und
B) 2 bis 30 Gew.-%, bezogen auf die Komponenten A und B, einer Polymermischung B enthaltend:
i) 30 bis 70 Gew.-%, bezogen auf das Gesamtgewicht der Komponenten i bis ii, mindestens eines Polyesters auf Basis von aliphatischen und aromatischen Dicarbonsäuren und einer aliphatischen Dihydroxyverbindung;
ii) 70 bis 30 Gew.-%, bezogen auf das Gesamtgewicht der Komponenten i bis ii, Polymilchsäure;
iv) 0 bis 10 Gew.-%, bezogen auf das Gesamtgewicht der Komponenten i bis iv, eines Epoxidgruppen-haltigen Copolymers auf Basis Styrol, Acrylsäureester und/oder Methacrylsäureester;
iv) 0 - 15 % Gew.-%, bezogen auf das Gesamtgewicht der Komponenten i bis iv, Nukleierungsmittel, Gleit- und Antiblockmittel, Wachse, Antistatika, Antifog-Mittel oder Farbstoffe; und
C) 0 bis 40 Gew.-%, bezogen auf die Komponenten A bis C, weiterer Zusatzstoffe.

5. Verfahren nach Anspruch 4, **dadurch gekennzeichnet, dass** der Thermoplast A ein amorphes Polymer ausgewählt aus der Gruppe bestehend aus Polyvinylchlorid, Polystyrol und Polymethylmethacrylat ist.

6. Verfahren nach Anspruch 4, **dadurch gekennzeichnet, dass** der Thermoplast A ein teilkristallines Polymer ausgewählt aus der Gruppe bestehend aus Polyamid, Polybutylenterephthalat und Polyoxymethylen ist.
